# EUROPEAN PATENT SPECIFICATION

(11) **EP 2 487 834 B1**
(45) Date of publication and mention of the grant of the patent: **07.10.2020**
(21) Application number: 10791414.5
(22) Date of filing: 28.05.2010
(51) Int. Cl.: H04Q 11/00, H04L 12/26

(54) **METHOD FOR DETECTING DEGRADED SIGNAL DEFECT**
VERFAHREN ZUR ERKENNUNG VON VERSCHLECHTERTEN SIGNALEN
PROCÉDÉ DE DÉTECTION DE DÉFAUT DE SIGNAL DÉGRADÉ

(30) Priority: 10.11.2009 CN 200910110069
(43) Date of publication of application: 15.08.2012
(73) Proprietor: ZTE Corporation, Shenzhen, Guangdong 518057 (CN)
(72) Inventor: MA, Yuxia, Shenzhen Guangdong 518057 (CN); XU, Zehua, Shenzhen Guangdong 518057 (CN)
(74) Representative: Murgitroyd & Company
(86) International application number: PCT/CN2010/073355
(87) International publication number: WO 2010/148908

(56) References cited:
- CN-A- 1 842 033
- CN-A- 1 929 390
- CN-A- 101 047 477
- CN-A- 101 056 184
- US-A1- 2007 230 364
- US-A1- 2007 242 604

## Description

### Technical Field

The present invention relates to a method for detecting degraded signal defect (dDEG).

### Background of the Related Art

Multi-Protocol Label Switching (MPLS) integrates the high performance of label forwarding and the flexibility and scalability of network layer routing. All packet transport network technologies such as Transport MPLS, and MPLS-Transport Profile (MPLS-TP) are evolved from the MPLS. They provide end-to-end Operation And Maintenance mechanism (OAM) functionality. Standard documents "ITU-T Recommendation Y.1711", "ITU-T Recommendation G.8121/Y.1381", "Draft new Amendment 1 to ITU-T Recommendation G.8121/Y.1381" and "Draft new ITU-T Recommendation Y.17tom [candidate number Y.1373/G.8114]" define a variety of defect types and defect detection methods. The dDEG detection method is described as follows:
Every second, the loss measurement (LM defined in the G.8114) is used to acquire the number of remotely transmitted messages and the number of locally lost messages, if the number of remotely transmitted messages is greater than the minimum threshold of the number of transmitted messages (TF_MIN), then the packet loss ratio (the packet loss ratio is equal to the number of locally lost messages / the number of remotely transmitted messages) is calculated. If the packet loss ratio is greater than the degradation threshold (DEGTHR) or the number of locally lost messages is negative (that is, the number of received messages is greater than the number of remotely transmitted messages), the Bad Second (BS) is increased by 1, and the Good Second (GS) is cleared; otherwise, the BS is cleared, and the GS is increased by 1. When the BS is greater than the defect detection period (MI_LM_DEGM), a dDEG occurs; when the GS is greater than the defect exit period (MI_LM_M), the dDEG disappears.

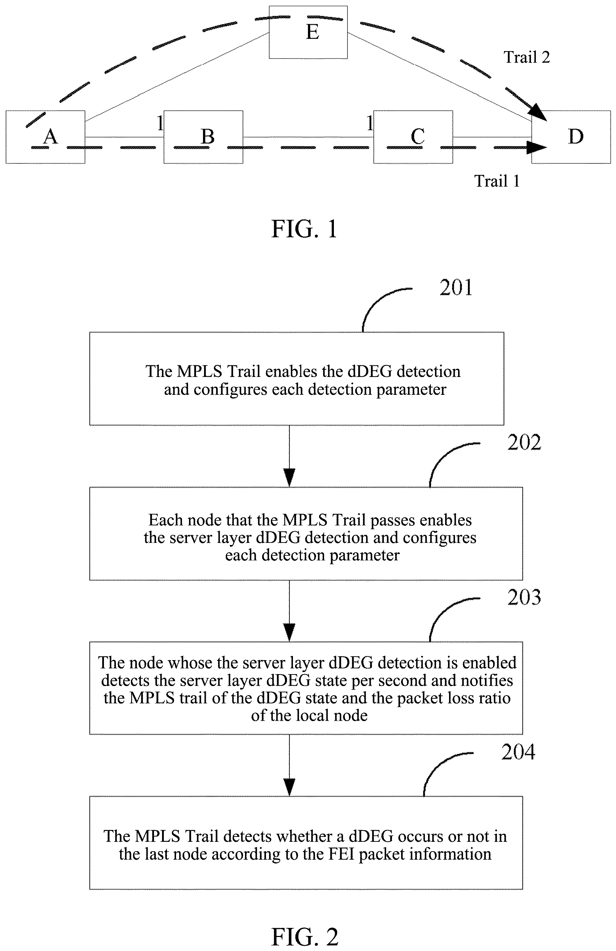

The aforementioned method performs detection according to the multi-protocol label switching Trail (MPLS Trail), and depends on the Trail itself for carrying the customer data messages, that is, there are messages to send and receive. When a Trail does not carry the customer data messages, the Trail must be in the state of signal degradation disappearance. In the following applications, there will be problems. The network is as shown in FIG. 1, the Trail 1 is through A->B->C->D, and the Trail 2 is through A->E->D. The Trail 1 and the Trail 2 consist of a 1:1 protection group in revertive mode, the Trail 1 is the working Trail. At the beginning, the customer data messages are transmitted via the Trail 1, when there is a dDEG detected on the Trail 1, the protection group switches, the customer data messages are transmitted via the Trail 2 rather than the Trail 1. After MI_LM_M seconds, the Trail 1 considers that the dDEG disappears, the protection group re-switches, and the Trail 1 is re-selected to send data. After MI_LM_DEGM seconds, the dDEG is detected again, the protection group re-switches. The dDEG disappears repeatedly, and the protection group switches repeatedly, and each switching will result in the customer data packet loss. The scenario as shown in FIG. 1 is more common in practical applications, thus the practical application of the aforementioned method has been weakened.

The document US 2007/0230364 A1 discloses a defect indication on a multipoint logical path and switching of the logical path when the multipoint logical path is configured using a transfer protocol of configuring a logical path, typified by MPLS etc., in a ring network. Two routes of the multipoint logical paths, a working path and a backup path, are set up.

The document US 2007/0230364 A1 discloses a method of detecting a signal degrade of transmission data and a method of detecting a restoration from a signal degrade. The method of detecting a signal degrade includes measuring a discarded data rate of traffic and comparing said discarded data rate with a threshold value to detect the signal degrade.

### Content of the Invention

The purpose of the present invention is to provide a method for detecting degraded signal defects to reduce the number of protection switches and reduce data packet loss.

The above problem is solved by a method for detecting degraded signal defects according to claim 1.

### Brief Description of Drawings

FIG. 1 is a network application scenario of the MPLS Trail signal degradation in the related art;
FIG. 2 is a flow chart of a method for detecting degraded signal defects in accordance with an embodiment of the present invention;
FIG. 3 is a schematic diagram of the process of detecting server layer signal degradation in an application of the method for detecting the degraded signal defects in accordance with the present invention;
FIG. 4 is a diagram of the process of detecting the MPLS Trail signal degradation in an application of the method for detecting the degraded signal defects in accordance with the present invention.

### Preferred Embodiments of the Present Invention

The specific embodiments of the present invention will be described in detail in the following in combination with the accompanying drawings. A method for detecting degraded signal defects is provided, which is applied to the packet transport network, and specifically, it comprises but not limited to be used in the Multi-Protocol Label Switching Trail (MPLS Trail), the transport Multi-Protocol Label Switching (Transport MPLS), or the MPLS-Transport Profile (MPLS-TP). For consistency, in the following embodiments, only the MPLS Trail is taken to illustrate, but it can also be applied to the TMPLS and the MPLS-TP.

The present invention uses the following technical solution: the dDEG is detected at the receiving side of each node that is on the server layer and the MPLS Trail passes, the detection result is transmitted to the last node on the MPLS Trail via the newly defined Forward Error Indication (FEI) packets. The last node on the MPLS Trail comprehensively judges the dDEG on the MPLS Trail according to the detection result of each node.

Refer to FIG. 2, specifically the following steps are comprised:
201. the MPLS Trail enables the dDEG detection and configures the degradation threshold DEGTHR_M, as well as the degradation detection period DEG_ENTRY_M and the exit period DEG_EXIT_M;
202. each node that the MPLS Trail passes enables the server layer dDEG detection and configures the node degradation threshold DEGTHR_N, the node degradation detection period DEG_ENTRY_N, the node exit period DEG_EXIT_N, the threshold of the total number of messages received by the nodes RF_MIN and the threshold of the FEI messages transmitted by the nodes FEITHR_N;
203. the nodes whose the server layer dDEG detection is enabled detect the server layer dDEG state per second. According to the frame check sequence (FCS) of the Ethernet port, or according to the Cyclical Redundancy Check (CRC) error in the Synchronous Transport Module level n (STM-n) port Generic Framing Procedure (GFP) package, the packet loss ratio might be calculated (the error messages will be discarded), where n is a natural number. The packet loss ratio is calculated as follows:
   the packet loss ratio = 0, if the total number of received messages is less than RF_MIN, otherwise;
   the packet loss ratio = the number of the FCS error messages / the total number of received messages, wherein, the number of FCS error messages comprises the number of too long and too short frames; or the packet loss ratio = the number of GFP CRC error messages / the total number of received messages.

When the packet loss ratio is greater than DEGTHR_N and the duration reaches the DEG_ENTRY_N, a server layer dDEG occurs. When the packet loss ratio is less than DEGTHR_N and the duration reaches DFG_EXIT_N, the server layer dDEG disappears.

When the packet loss ratio is greater than FEITHR_N, the FEI messages are sent in the downstream, that is, the FEI messages are sent to all the MPLS Trails that pass the server layer. When the packet loss ratio is less than FEITHR_N, stop sending the FEI messages. The key fields contained in the FEI message are as follows:
the server layer dDEG: indicating the state of the server layer dDEG, 1 indicates that a dDEG occurs, 0 indicates that the dDEG disappears.

Node Id: the ID of the node that sends the FEI messages, the Media Access Control (MAC) address or other identifier of the node can be used. With this field, the MPLS Trail can distinguish different nodes that send the FEI messages.

Error Ratio: indicating the packet loss ratio of the server layer. It is represented in the format of XE-Y, wherein, the first byte represents the integer X and the second byte represents the integer Y.

204. the MPLS Trail detects whether a dDEG occurs in the last node or not. At each second, according to the FEI message information received from the upstream nodes, calculates whether the MPLS Trail has the dDEG or not. Its calculation rules are as follows:
1) if the server layer dDEG in the FEI sent by any of the upstream nodes is 1, the MPLS Trail enters into the state of dDEG, otherwise;
2) sum the server layer packet loss ratio in the FEI messages received by different nodes, when the summed packet loss ratio is greater than DEGTHR_M, the BS is increased by 1, and the GS is cleared. When the BS reaches DEG_ENTRY_M, the MPLS Trail dDEG occurs. When the packet loss ratio is less than the DEGTHR_M, the BS is cleared and the GS is increased by 1, when the GS reaches the DEG_EXIT_M, the MPLS Trail dDEG disappears.

With the method of the present invention, when the server layer of the MPLS Trail has signal degradation, it is almost certain that the MPLS Trail has the same level of signal degradation in the regions of the server layer. In other words, the sum of the signal degradations occurred in each region of the server layer of the MPLS Trail can simulate the signal degradation of the MPLS Trail. In this way, even if the MPLS Trail does not carry the data messages, as long as its server layer carries data messages, the signal degradation on the MPLS Trail can be detected, so that the state of the signal degradation of the MPLS Trail is stable, and the protection group does no longer switch repeatedly.

In the following, application examples of the method for detecting the degraded signal defects in the present invention are provided, it should be noted that, the server layer interface type, parameter configuration values, and so on used in the examples are used to illustrate but not to limit the present invention.

Take the application example in FIG. 1 for example. Each node is connected via the Ethernet port. The MPLS Trail 1 is through A-> B-> C-> D, and the MPLS Trail 2 is through A-> E-> D. A protection group consists of the Trail 1 and the Trail 2. Each node is also configured with other Trails.
Step 1, configure the Trail 1 with the enabled dDEG detection and configure the related parameters:
   the degradation threshold DEGTHR_M is 1E-4;
   the degradation detection period DEG_ENTRY_M is 1 second;
   the degradation exit period DEG_EXIT_M is 3 seconds;
step 2, enable the port B-1 and port C-1 dDEG detection in the nodes B and C that the Trail 1 passes, and configure the related parameters:
   the node degradation threshold DEGTHR_N is 1E-4;
   the node degradation detection period DEG_ENTRY_N is one second;
   the node degradation exit period DEG_EXIT_N is 3 seconds;
   the threshold of the total number of messages received by the node RF_MIN is 100;
      The threshold of the FEI messages transmitted by the node FEITHR_N is 1E-6;
step 3, the nodes B and C detect the total number of messages and the total number of FCS messages received at the ports B-1 and C-1 per second, and calculate the packet loss ratio.
Step 4, when the link is normal, the packet loss ratio of the ports B-1 and C-1 is zero, no dDEG occurs, no FEI message is inserted in the downstream. The Trail 1 does not have dDEG occurred.
Step 5, the link A-> B has signal degradation, resulting in the proportion of FCS error packets is 5E-5, that is, the packet loss ratio is 5E-5. The packet loss ratio is less than 1E-4 but greater than 1E-6, thus it does not generate signal degradation at the port, but it still inserts the FEI message into the Trail 1 per second, wherein, the content of each major field is as follows:
   the server layer dDEG: 0
   Node Id: MAC address of the Node B
   Error Ratio: 0x0505
Step 6, after the node D receives the FEI message sent by the Node B from the Trail 1, it records the content of the FEI message. The dDEG is calculated per second. In the absence of the server layer dDEG, the sum of the packet loss ratio of each node is 5E-5, not greater than the threshold 1E-4, thus the Trail 1 has no dDEG occurred.
Step 7, the link B-> C also has signal degradation, resulting in the proportion of FCS error messages 7E-5, that is, the packet loss ratio is 7E-5. The packet loss ratio is less than the threshold of 1E-4, thus it does not produce the signal degradation at the port, but the FEI message is inserted to the Trail 1 per second, wherein, the contents of all the major fields are as follows:
   the server layer dDEG: 0
   Node Id: the MAC address of the Node C
   Error Ratio: 0x0705
Step 8, after the node D receives the FEI message sent by the node C from the Trail 1, it records the content of the FEI message. The dDEG is calculated per second. There is no server layer dDEG, but the sum of the packet loss ratio of each node is 12E-5, that is, 1.2E-4, greater than the threshold 1E-4 for one second, then the dDEG occurs, the protection group is triggered to switch to the alternate Trail 2. Since the ports B-1 and C-1 also carry other data messages at the same time, the dDEG is detected all the time, thus the state of the protection group is stable.
Step 9, the links A-> B and B-> C are back to normal, the packet loss ratio is 0, then the node B and the node C do not send the FEI messages any longer. The node D does not receive the FEI messages from each node within three seconds, information transmitted by each node is aging, that is, the server layer dDEG of each node is indicated as 0, the packet loss ratio is 0, the dDEG of the Trail 1 disappears. The protection group is triggered to switch back to the primary Trail 1.
Step 10, the link A->B has signal degradation again, resulting in the proportion of FCS error messages 2E-4, that is, the packet loss ratio is 2E-4. The packet loss ratio is greater than 1E-4, and also greater than 1E-6, thus, it generates the signal degradation at the port, meanwhile, the FEI message is inserted into the Trail 1 per second, wherein, the contents of all the major fields are as follows:
   the server layer dDEG: 1
   Node Id: the MAC address of the Node B
   Error Ratio: 0x0204
Step 11, after the node D receives the FEI message sent by the node B from the Trail 1, it records the content of the FEI message. The dDEG is calculated per second. Since there is server layer dDEG, the Trail 1 generates the dDEG, and the protection group is triggered to switch to the alternate Trail 2.
step 12, the link A-> B is back to normal, the packet loss ratio is 0, then the node B does not send the FEI messages any longer. The node D does not receive the FEI messsage of the node B within three seconds, the information transmitted by each node is aging, that is, the server layer dDEG of the node B is indicated as 0, the packet loss ratio is 0, the dDEG of the Trail 1 disappears, and the protection group is triggered to switch back to the primary Trail 1.

The above application can be seen from two points of view: server layer signal degradation detection and MPLS Trail signal degradation detection.

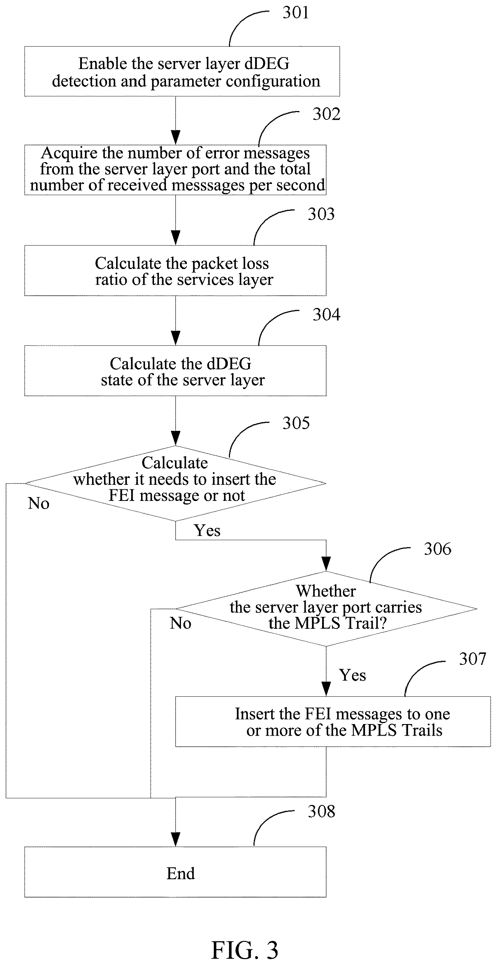

Specifically, in the view of the server layer signal degradation detection, refer to FIG. 3, it might comprise:
301. enable the server layer dDEG detection and parameter configuration;
302. acquire the number of error messages from the server layer port and the total number of messages per second;
303. calculate the packet loss ratio of the server layer;
304. according to the packet loss ratio of the server layer, calculate the dDEG state of the server layer;
305. according to the calculated dDEG state of the server layer, calculate whether it needs to insert the FEI message or not; if it needs, proceed to step 306; otherwise proceed to step 308;
306. judge whether the server layer port carries the MPLS Trail or not, if yes, proceed to step 307; otherwise proceed to step 308;
307. insert the FEI messages to one or more of the carried MPLS Trails;
308. end the server layer signal degradation detection process.

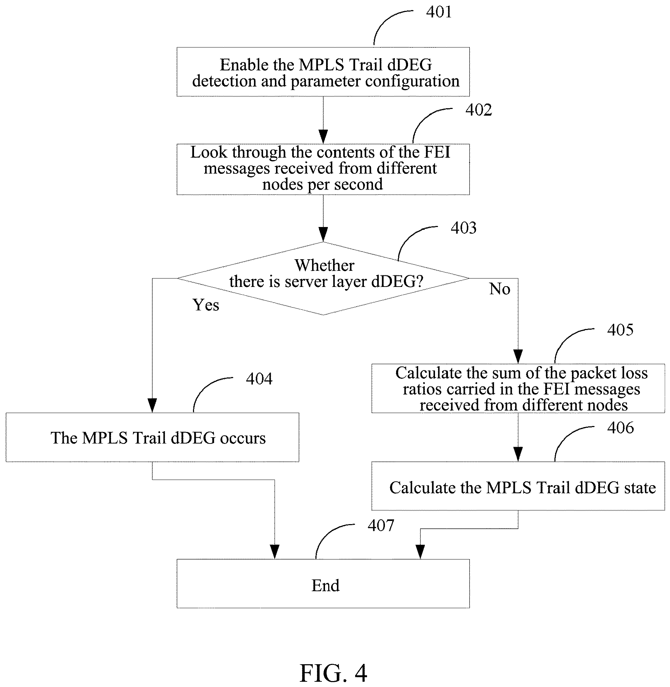

Refer to FIG. 4, in the view of the MPLS Trail signal degradation detection, it might comprise:
401. enable the MPLS Trail dDEG detection and parameter configuration;
402. look through the contents of the FEI messages received from different nodes per second;
403. judge whether there is server layer dDEG or not, if yes, proceed to step 404; otherwise proceed to step 405;
404. the MPLS Trail dDEG occurs, proceed to step 407;
405. calculate the sum of the packet loss ratios carried in the FEI messages received from different nodes;
406. calculate the MPLS Trail dDEG state;
407. end the current MPLS Trail signal degradation detection.

The above description is only the specific embodiments of the present invention, it should be noted that, for those skilled in the field, without departing from the scope of the present invention, a number of improvements and retouching can also make, these improvements and retouching should be within the scope of the present invention.

### Industrial Applicability

With the method provided in the present invention for detecting degraded signal defects, the sum of signal degradations occurred in each passed region of the server layer can simulate the signal degradation in the packet transport network. Therefore, even if there are no data messages carried in the packet transport network, as long as the server layer carries the data messages, the signal degradation can be detected, thus the state of the signal degradation is stable, the protection group does not switch repeatedly any longer, thereby reducing the customer data packet loss caused by each switch.

## Claims

1. A method for detecting degraded signal defects, **characterized by** comprising:
a packet transport network trail enabling (201) a degraded signal defects detection and configuring (201) a degradation threshold DEGTHR_M, a degradation detection period DEG_ENTRY_M and an exit period DEG_EXIT_M;
each node that the packet transport network trail passes enabling (202) a server layer degraded signal defects detection and configuring (202) a node degradation threshold DEGTHR_N, a node degradation detection period DEG_ENTRY_N, a node exit period DEG_EXIT_N, a threshold of the total number of messages received by nodes RF_MIN and a threshold of forward error indication, FEI, messages transmitted by nodes FEITHR_N for said nodes whose server layer degraded signal defects detection is enabled, calculating (203) a packet loss ratio on a receiving port, and performing following two judgments:
when the packet loss ratio is greater than the DEGTHR_N and a duration reaches the DEG_ENTRY_N, the server layer degraded signal defect occurring, and when the packet loss ratio is less than the DEGTHR_N and the duration reaches the DEG_EXIT_N, the server layer degraded signal defect disappearing;
when the packet loss ratio is greater than the FEITHR_N, sending downstream the FEI messages to the packet transport network trail that passes the server layer, and
when the packet loss ratio is less than the FEITHR_N, stopping sending the FEI messages ; wherein the FEI message includes a state of the server layer degraded signal defect, ID of the node that sends the FEI messages and the packet loss ratio of the server layer;
the packet transport network trail detecting (204) whether the degraded signal defect occurs in last node or not according to the FEI message information received from upstream nodes.

2. The method of claim 1, wherein, the step of calculating the packet loss ratio comprises:
according to a frame check sequence of an Ethernet port or an cyclic redundancy check (CRC) error in a synchronous transport signal-level n-port generic Framing procedure package, calculating the packet loss ratio, where n is a natural number.

3. The method of claim 2, wherein,
when the total number of received messages is less than a threshold of the total number of received messages, the packet loss ratio is zero;
when the total number of received messages is greater than or equal to the threshold of the total number of received messages, the packet loss ratio is calculated as: the packet loss ratio = the number of messages whose frame check sequence has an error / the total number of receive messages, or the packet loss ratio = the cyclic redundancy check (CRC) in the generic Framing Procedure package / the total number of received messages, wherein, the number of messages whose frame check sequence has an error comprises the number of too-long and too-short frames.

4. The method of claim 1, wherein, the step of the packet transport network trail detecting (204) whether the degraded signal defect occurs in last node comprises:
if a detection result of any upstream node indicates that the server layer degraded signal defect occurs, determining that the degraded signal defect occurs; or
summing packet loss ratios in the FEI messages of the upstream nodes, and when a sum is greater than or equal to the DEGTHR_M, increasing a bad second by 1, and clearing a good second; when the bad second is equal to the DEG_ENTRY_M, determining that the degraded signal defect occurs.

5. The method of claim 4, wherein, the step of the packet transport network trail detecting (204) whether the degraded signal defect occurs in last node further comprises:
when the sum is less than the DEGTHR_M, clearing the bad second, and increasing the good second by 1; when a value of the good seconds equal to the DEG_EXIT_M, determining that the degraded signal defect is disappeared.

6. The method of claim 1, wherein, the packet transport network trail comprises a multi-protocol label switching trail, a transport multi-protocol label switching trail or a multi-protocol label switching transport profile trail.

## Patentansprüche

1. Ein Verfahren zum Erkennen von Defekten durch verschlechterte Signale, **dadurch gekennzeichnet, dass** es Folgendes beinhaltet:
durch einen Pakettransportnetzwerkpfad, Aktivieren (201) einer Erkennung von Defekten durch verschlechterte Signale und Konfigurieren (201) einer Verschlechterungsschwelle DEGTHR_M, eines
Verschlechterungserkennungszeitraums DEG_ENTRY_M und eines Austrittszeitraums DEG_EXIT_M;
durch jeden Knoten, den der Pakettransportnetzwerkpfad passiert, Aktivieren (202) einer Erkennung von Defekten durch verschlechterte Signale auf der Serverschicht und Konfigurieren (202) einer Knotenverschlechterungsschwelle DEGTHR_N, eines Knotenverschlechterungserkennungszeitraums DEG_ENTRY_N, eines Knotenaustrittszeitraums DEG_EXIT_N, einer Schwelle der Gesamtanzahl von durch Knoten empfangenen Nachrichten RF_MIN und einer Schwelle von durch Knoten übertragenen FEI-Nachrichten (FEI = Forward Error Indication, Vorwärtsfehlerangabe) FEITHR _N für die Knoten, deren Erkennung von Defekten durch verschlechterte Signale auf der Serverschicht aktiviert ist, Berechnen (203) eines Paketverlustverhältnisses an einem Empfangsport und Durchführen der zwei folgenden Beurteilungen:
wenn das Paketverlustverhältnis größer als die DEGTHR_N ist und eine Dauer den DEG_ENTRY_N erreicht, Auftreten des Defekts durch verschlechterte Signale auf der Serverschicht, und wenn das Paketverlustverhältnis kleiner als die DEGTHR_N ist und die Dauer den DEG_EXIT_N erreicht, Verschwinden des Defekts durch verschlechterte Signale auf der Serverschicht;
wenn das Paketverlustverhältnis größer als die FEITHR_N ist, Abwärtssenden der FEI-Nachrichten an den Pakettransportnetzwerkpfad, der die Serverschicht passiert, und wenn das Paketverlustverhältnis kleiner als die FEITHR_N ist, Stoppen des Sendens der FEI-Nachrichten; wobei die FEI-Nachricht einen Zustand des Defekts durch verschlechterte Signale auf der Serverschicht, eine Kennung des Knotens, der die FEI-Nachrichten sendet, und das Paketverlustverhältnis der Serverschicht umfasst;
Erkennen (204), durch den Pakettransportnetzwerkpfad, gemäß den FEI-Nachrichteninformationen, die von aufwärts gelagerten Knoten empfangen werden, ob der Defekt durch verschlechterte Signale in dem letzten Knoten auftritt oder nicht.

2. Verfahren gemäß Anspruch 1, wobei der Schritt des Berechnens des Paketverlustverhältnisses Folgendes beinhaltet:
Berechnen des Paketverlustverhältnisses gemäß einer Blockprüfzeichenfolge eines Ethernetports oder einem CRC-Fehler (CRC = Cyclic Redundancy Check, zyklische Redundanzprüfung) in einem n-Port-GFP(Generic Framing Procedure)-Paket der STS(Synchronous Transport Signal)-Schicht, wobei n eine natürliche Zahl ist.

3. Verfahren gemäß Anspruch 2, wobei,
wenn die Gesamtanzahl empfangener Nachrichten kleiner als eine Schwelle der Gesamtanzahl empfangener Nachrichten ist, das Paketverlustverhältnis null ist; wenn die Gesamtanzahl empfangener Nachrichten größer als oder gleich der Schwelle der Gesamtanzahl empfangener Nachrichten ist, das Paketverlustverhältnis wie folgt berechnet wird: Paketverlustverhältnis = Anzahl von Nachrichten, deren Blockprüfzeichenfolge einen Fehler aufweist/Gesamtanzahl empfangener Nachrichten oder Paketverlustverhältnis = zyklische Redundanzprüfung (CRC) in dem GFP-Paket/Gesamtanzahl empfangener Nachrichten, wobei die Anzahl von Nachrichten, deren Blockprüfzeichenfolge einen Fehler aufweist, die Anzahl zu langer und zu kurzer Blöcke beinhaltet.

4. Verfahren gemäß Anspruch 1, wobei der Schritt des Erkennens (204), durch den Pakettransportnetzwerkpfad, ob der Defekt durch verschlechterte Signale in dem letzten Knoten auftritt, Folgendes beinhaltet:
falls ein Erkennungsergebnis eines beliebigen aufwärts gelagerten Knotens angibt, dass der Defekt durch verschlechterte Signale auf der Serverschicht auftritt, Bestimmen, dass der Defekt durch verschlechterte Signale auftritt; oder
Summieren von Paketverlustverhältnissen in den FEI-Nachrichten der aufwärts gelagerten Knoten und, wenn eine Summe größer als oder gleich der DEGTHR_M ist, Erhöhen einer schlechten Sekunde um 1 und Löschen einer guten Sekunde; wenn die schlechte Sekunde gleich dem DEG_ENTRY_M ist, Bestimmen, dass der Defekt durch verschlechterte Signale auftritt.

5. Verfahren gemäß Anspruch 4, wobei der Schritt des Erkennens (204), durch den Pakettransportnetzwerkpfad, ob der Defekt durch verschlechterte Signale in dem letzten Knoten auftritt, ferner Folgendes beinhaltet:
wenn die Summe kleiner als die DEGTHR_M ist, Löschen der schlechten Sekunde und Erhöhen der guten Sekunde um 1; wenn ein Wert der guten Sekunden gleich dem DEG_EXIT_M ist, Bestimmen, dass der Defekt durch verschlechterte Signale verschwunden ist.

6. Verfahren gemäß Anspruch 1, wobei der Pakettransportnetzwerkpfad einen Multi-Protocol-Label-Switching-Pfad, einen Transport-Multi-Protocol-Label-Switching-Pfad oder einen Multi-Protocol-Label-Switching-Transportprofilpfad beinhaltet.

## Revendications

1. Un procédé pour la détection de défauts de signal dégradé, **caractérisé par** le fait de comprendre :
une trace de réseau de transport de paquets activant (201) une détection de défauts de signal dégradé et configurant (201) un seuil de dégradation DEGTHR_M, une période de détection de dégradation DEG_ENTRY_M et une période de sortie DEG_EXIT_M ;
chaque nœud par lequel passe la trace de réseau de transport de paquets activant (202) une détection de défauts de signal dégradé de couche serveur et configurant (202) un seuil de dégradation de nœud DEGTHR_N, une période de détection de dégradation de nœud DEG_ENTRY_N, une période de sortie de nœud DEG_EXIT_N, un seuil du nombre total de messages reçus par des nœuds RF_MIN et un seuil de messages d'indication d'erreurs sans voie de retour (*Forward Error Indication,* FEI) transmis par des nœuds FEITHR _N pour lesdits nœuds dont la détection de défauts de signal dégradé de couche serveur est activée, calculant (203) un rapport de perte de paquets sur un port de réception, et effectuant les deux jugements suivants :
lorsque le rapport de perte de paquets est supérieur au DEGTHR_N et qu'une durée atteint la DEG_ENTRY_N, le défaut de signal dégradé de couche serveur se produisant, et lorsque le rapport de perte de paquets est inférieur au DEGTHR_N et que la durée atteint la DEG_EXIT_N, le défaut de signal dégradé de couche serveur disparaissant ;
lorsque le rapport de perte de paquets est supérieur au FEITHR_N, l'envoi en aval des messages FEI à la trace de réseau de transport de paquets qui passe par la couche serveur, et lorsque le rapport de perte de paquets est inférieur au FEITHR_N, l'arrêt d'envoi des messages FEI ; le message FEI incluant un état du défaut de signal dégradé de couche serveur, une ID du nœud qui envoie les messages FEI et le rapport de perte de paquets de la couche serveur ;
la trace de réseau de transport de paquets détectant (204) si le défaut de signal dégradé se produit dans le dernier nœud ou non selon les informations de message FEI reçues en provenance de nœuds en amont.

2. Le procédé de la revendication 1, dans lequel, l'étape de calcul du rapport de perte de paquets comprend :
selon une séquence de contrôle de trame d'un port Ethernet ou une erreur de contrôle de redondance cyclique (*Cyclic Redundancy Check,* CRC) dans un paquet de procédure de tramage générique n-ports de niveau de signal de transport synchrone, le calcul du rapport de perte de paquets, où n est un nombre naturel.

3. Le procédé de la revendication 2, dans lequel,
lorsque le nombre total de messages reçus est inférieur à un seuil du nombre total de messages reçus, le rapport de perte de paquets vaut zéro ;
lorsque le nombre total de messages reçus est supérieur ou égal au seuil du nombre totale de messages reçus, le rapport de perte de paquets est calculé comme : le rapport de perte de paquets = le nombre de messages dont la séquence de contrôle de trame contient une erreur / le nombre total de messages reçus, ou le rapport de perte de paquets = le contrôle de redondance cyclique (CRC) dans le paquet de procédure de tramage générique / le nombre total de messages reçus, le nombre de messages dont la séquence de contrôle de trame contient une erreur comprenant le nombre de trames trop longues et trop courtes.

4. Le procédé de la revendication 1, dans lequel, l'étape de la trace de réseau de transport de paquets détectant (204) si le défaut de signal dégradé se produit dans le dernier nœud comprend :
si un résultat de détection de n'importe quel nœud en amont indique que le défaut de signal dégradé de couche serveur se produit, la détermination que le défaut de signal dégradé se produit ; ou
la somme de rapports de perte de paquets dans les messages FEI des nœuds en amont, et lorsqu'une somme est supérieure ou égale au DEGTHR_M, l'augmentation d'une mauvaise seconde de 1, et le saut d'une bonne seconde ; lorsque la mauvaise seconde est égale à la DEG_ENTRY_M, la détermination que le défaut de signal dégradé se produit.

5. Le procédé de la revendication 4, dans lequel, l'étape de la trace de réseau de transport de paquets détectant (204) si le défaut de signal dégradé se produit dans le dernier nœud comprend en outre :
lorsque la somme est inférieure au DEGTHR_M, le saut de la mauvaise seconde, et l'augmentation de la bonne seconde de 1 ; lorsqu'une valeur des bonnes secondes est égale à la DEG_EXIT_M, la détermination que le défaut de signal dégradé a disparu.

6. Le procédé de la revendication 1, dans lequel, la trace de réseau de transport de paquets comprend une trace de commutation d'étiquettes multiprotocole, une trace de commutation d'étiquettes multiprotocole de transport ou une trace de profil de transport de commutation d'étiquettes multiprotocole.
